(19) Europäisches Patentamt
European Patent Office
Office européen des brevets

(11) Veröffentlichungsnummer : **0 130 522**
**B1**

(12) # EUROPÄISCHE PATENTSCHRIFT

(45) Veröffentlichungstag der Patentschrift : **10.09.86**

(51) Int. Cl.[4] : **C 07 C149/23**, C 08 K 5/37

(21) Anmeldenummer : **84107263.0**

(22) Anmeldetag : **25.06.84**

(54) **Alterungsschutzmittel, ihre Herstellung und diese enthaltende Polymere.**

(30) Priorität : **05.07.83 DE 3324194**

(43) Veröffentlichungstag der Anmeldung : **09.01.85 Patentblatt 85/02**

(45) Bekanntmachung des Hinweises auf die Patenterteilung : **10.09.86 Patentblatt 86/37**

(84) Benannte Vertragsstaaten : **DE FR GB IT**

(56) Entgegenhaltungen :
**FR-A- 2 361 424**
**US-A- 3 975 414**

(73) Patentinhaber : **BAYER AG**
**Konzernverwaltung RP Patentabteilung**
**D-5090 Leverkusen 1 Bayerwerk (DE)**

(72) Erfinder : **Buysch, Hans-Josef, Dr.**
**Brandenburger Strasse 28**
**D-4150 Krefeld (DE)**
Erfinder : **Szentivanyi, Zsolt, Dr.**
**Carl-Rumpff-Strasse 9**
**D-5090 Leverkusen (DE)**
Erfinder : **Witte, Josef, Dr.**
**Haferkamp 10**
**D-5000 Köln 80 (DE)**

**EP 0 130 522 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Verbindungen der Formel (I)

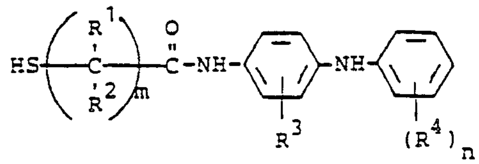

(I)

in der
- $R^1$ und $R^2$ H oder $C_1$-$C_4$-Alkyl,
- $R^3$ H oder $CH_3$
- $R^4$ $C_7$-$C_{20}$-Aralkyl
- n 1 oder 2 und
- m eine ganze Zahl von 1-12 bedeuten,

ihre Herstellung sowie Polymere, die diese Alterungsschutzmittel enthalten.

Polymere werden bei Einwirkung von Licht, Luft und Hitze rasch verändert und verlieren in Folge von Abbau- und Vernetzungsvorgängen ihre guten Gebrauchseigenschaften. Daher werden den Polymeren Alterungsschutzmittel zugesetzt, die ihre Lebensdauer beträchtlich verlängern. Eine Zumischung von Alterungsschutzmitteln reicht aber häufig nicht aus, wenn Gebrauchsartikel aus solchen Polymeren mit Medien in Berührung kommen, die die Alterungsschutzmittel zu extrahieren vermögen und damit ihre Schutzfunktion erheblich beeinträchtigen oder gar aufheben. Es ist auch bekannt, daß Alterungsschutzmittel migrieren und aus den Polymeren ausschwitzen.

Man hat vorgeschlagen, in solchen Fällen, die Alterungsschutzmittel an das Polymere zu binden oder polymere Alterungsschutzmittel zu verwenden.

So wird in der DE-OS 2 735 178 beschrieben, an die Polymerkette Alterungsschutzmittel der allgemeinen Formel

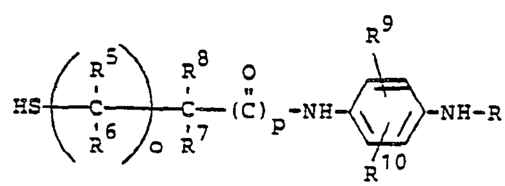

(II)

worin
- R u. a. gegebenenfalls durch $C_1$-$C_4$-Alkyl substituiertes Phenyl
- $R^5$-$R^{10}$ H oder $C_1$-$C_5$-Alkyl,
- p 0 oder 1 und
- o 0 bis 12 bedeuten, zu knüpfen.

Zwar läßt sich nachweisen, daß diese Alterungsschutzmittel am Polymeren zumindestens teilweise fixiert werden und unter extraktiven Alterungsbedingungen einen gewissen begrenzten Alterungsschutz gewähren, doch besitzen so ausgerüstete Polymere eine merklich geringere Alterungsbeständigkeit, als sie mit bekannten, nicht fixierten Alterungsschutzmitteln auf Aminbasis wie Distyryldiphenylamin erreicht werden kann.

Ein weiterer Nachteil besteht darin, daß sie die Anvulkanisationsdauer (Scorchtime) und damit die Verarbeitungszeit der sie enthaltenden Polymermassen empfindlich einschränken.

Aufgabe der Erfindung war es, Alterungsschutzmittel bereitzustellen, die sowohl eine hinreichende Verarbeitungszeit garantieren, eine gute Schutzwirkung bieten, als auch an Polymere angebunden werden können und damit unter extraktiven Bedingungen gut wirksam bleiben.

Diese Aufgabe wird durch die eingangs beschriebenen Verbindungen der Formel I gelöst.

$R^1$ und $R^2$ sind bevorzugt H und Methyl, besonders bevorzugt H, n ist bevorzugt 1, m ist vorzugsweise 1-10, besonders bevorzugt 2-6, $R^3$ ist bevorzugt H und $R^4$ ist bevorzugt Aralkyl mit 7-18, besonders bevorzugt mit 7-9 C-Atomen.

Die erfindungsgemäßen Verbindungen werden hergestellt, indem man 4-Aminodiphenylaminderivate der Formel (III)

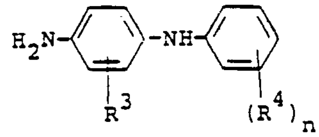

(III)

mit Mercaptocarbonsäurederivaten der Formeln (IV) oder

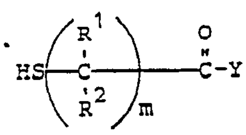

(IV)

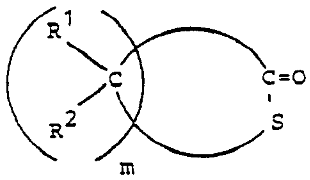

(V)

umsetzt, wobei $R^1$, $R^2$, $R^3$, $R^4$, m und n die vorstehend genannte Bedeutung besitzen und Y OH oder $OR^1$ bedeutet.

Die Verbindungen der Formel (III) werden in üblicher Weise durch Alkylierung von 4-Aminodiphenylaminen mit geeigneten Alkylierungsmitteln, wie Alkoholen, Ethern, Estern, Halogeniden oder Olefinen erhalten.

Die Alkylierung wird im allgemeinen bei Temperaturen zwischen 100 und 270 °C, insbesondere 130 und 250 °C in Substanz oder in inerten Lösungsmitteln, wie Toluol, Xylol, Tetralin, Cumol, Diisopropylbenzol, Chlorbenzol, o-Dichlorbenzol, Anisol oder Diphenylether in Gegenwart eines sauren Katalysators, insbesondere eines solchen mit einem in Wasser gemessenen $pK_S$-Wert < 2, der in einer Menge von 0,2 bis 200 Gew.-%, insbesondere 0,5 bis 100 Gew.-%, bezogen auf die Reaktionspartner der Alkylierungsreaktion eingesetzt wird, durchgeführt.

Geeignete saure Katalysatoren sind beispielsweise Chlorwasserstoffsäure, Bromwasserstoffsäure, Schwefelsäure, Sulfonsäuren wie p-Toluolsulfonsäure, phosphorige Säure, Phosphorsäure, Phosphonsäuren, wie Ethanphosphonsäure, säureaktivierte Bleicherden auf Basis von Montmorilloniten und Bentoniten und stark saure Ionenaustauscher, beispielsweise auf Basis sulfonierter vernezter Styrol-Divinylbenzol-Mischpolymerisate.

Das Molverhältnis der 4-Aminodiphenylamine zu den Alkylierungsmitteln beträgt im allgemeinen 1 : 5 bis 5 : 1, insbesondere 1 : 2 bis 2 : 1.

Die Reaktionsprodukte können zur Weiterreaktion beispielsweise durch Kristallisation oder Destillation gereinigt oder ohne weitere Reinigung weiter verarbeitet werden.

Die Aralkylgruppe geht vorzugsweise in die p-Stellung ; allerdings enthalten die Produkte auch immer gewisse Anteile an o-Verbindung.

Geeignete Ausgangsprodukte zur Herstellung der erfindungsgemäßen Alterungsschutzmittel sind beispielsweise 4-Aminodiphenylamin, als Alkylierungsmittel beispielsweise p-Methyl-α,α dimethylbenzylalkohol, m-Isopropyl-α,α-dimethylbenzylalkohol und p-tert.-Butyl-α,α-dimethylbenzylalkohol, vorzugsweise Benzylchlorid, Benzylalkohol, α-Methylbenzylalkohol, α,α-Dimethylbenzylalkohol, α,α-Dimethylbenzylchlorid, Styrol, α-Methylstyrol, p-Methylstyrol, α,p-Dimethylstyrol, p-Ethylstyrol, m-Isopropyl-α-methylstyrol, p-tert.-Butyl-α-methylstyrol, 1,3-Diphenylbuten-1,2,4-Diphenyl-4-methyl-penten-1 und 2,4-Diphenyl-4-methyl-penten-2, und als Mercaptocarbonsäurederivate beispielsweise α-Mercaptoisobuttersäure und deren Methylester, β-Mercapto-n-buttersäure und deren Ethylester, α-Mercaptopropionsäure, β,β-Dimethyl-β-mercaptopropionsäure, ω-Mercapto-undecansäure, Mercaptoessigsäure, β-Mercaptopropionsäure, γ-Mercaptobuttersäure, δ-Mercaptovaleriansäure und ε-Mercapto-hexansäure und die Methyl- und Ethylester der letztgenannten Säuren und gegebenenfalls deren Thiolactone.

Die Herstellung der Mercaptocarbonsäureamide der Formel (I) aus den 4-Aminodiphenylaminen der Formel (III) und den Mercaptocarbonsäurederivaten der Formeln (IV) und (V) erfolgt nach an sich bekannten Methoden. Man kann beispielsweise die Mercaptocarbonsäuren einsetzen und unter Wasseraustritt, zweckmäßig in Gegenwart eines Schleppmittels, wie Chlorbenzol oder Xylol, eine Kondensation zum Amid durchführen. Selbstverständlich ist auch die Aminolyse eines Mercaptocarbonsäureesters unter Austritt von Alkohol oder die ringöffnende Acylierung mit einem Thiolacton eine bevorzugte Verfahrensvariante.

Die Umsetzungen der 4-Aminodiphenylamine werden bei Temperaturen von 80-200 °C, vorzugsweise 100-180 °C, vorgenommen. Die Mercaptocarbonsäuren bzw. deren Derivate werden vorzugsweise in ungefähr äquimolarer Menge bezogen auf die Aminodiphenylamine der Formel (VIII) eingesetzt.

Die neuen Alterungsschutzmittel der Formel (I) können auf mehreren Wegen an Polymere angebunden werden, nämlich während der radikalischen Polymerisation der obengenannten Monomeren, vorzugsweise durch Addition an fertige Polymerisate, besonders bevorzugt aber während der Härtung und Vulkanisation der Polymeren.

Diese Reaktionen werden nach an sich bekannten Verfahren in Gegenwart der Verbindungen I in Masse, Emulsion, Lösung oder Dispersion, die Härtung oder Vulkanisation unter den üblichen Bedingungen und in Anwesenheit der bekannten Härtungs- und Vulkanisationssysteme durchgeführt. Die Menge an Alterungsschutzmittel beträgt 0,2-10 Gew.-%, bevorzugt 0,5-5 Gew.-% bezogen auf das Polymere.

Die erfindungsgemäßen Alterungsschutzmittel I können auch an Polymere mit Molgewichten von 1 000 bis 30 000 (Zahlenmittel), vorzugsweise von 2 000 bis 20 000 in hoher Konzentration addiert werden, so daß die Polymere einen Gehalt von 10 bis 60 Gew.-%, vorzugsweise von 15 bis 50 Gew.-% an gebundenem Alterungsschutzmittel enthalten. Derartige Verbindungen werden dann den hochmolekularen Polymeren zugesetzt und bilden ebenfalls migrationsfeste und schwer extrahierbare wirksame polymere Alterungsschutzmittel. Sie werden in solchen Mengen den hochmolekularen Polymeren zugesetzt, daß die vorstehend genannten Konzentrationen an Alterungsschutzmittel im Gesamtpolymer erhalten werden. Dazu werden die das Alterungsschutzmittel gebunden enthaltenden Polymeren mit niederem Molgewicht in Mengen von 1-25, bevorzugt 4-20 Gew.-%, bezogen auf die hochmolekularen Polymeren, eingesetzt.

Geeignete Polymere mit niedrigen Molgewichten für derartige Additionsreaktionen sind beispielsweise Polybutadiene, Polyisoprene, Mischpolymere von Butadien und/oder Isopren mit Styrol, Acrylnitril, Methylmethacrylat, Ethylacrylat, α-Methylstyrol, Piperylen, Hexadien-1,3, Ethylen, Propylen und Vinylacetat.

Die Addition der Alterungsschutzmittel an die Polymeren erfolgt unter radikalischen Bedingungen, beispielsweise in Gegenwart bekannter Radikalstarter wie Dicumylperoxid, Di-Tert.-butylperoxid oder Azodiisobutyronitril unverdünnt oder in inerten Lösungsmitteln wie Toluol, Xylol, Benzin, Chlorbenzol oder Dichlorbenzol bei Temperaturen zwischen 50 und 200 °C, bevorzugt 70-180 °C.

Geeignete Polymere mit niederen Molgewichten sind auch solche, die neben Doppelbindungen Oxirangruppen oder ausschließlich Oxirangruppen enthalten, an die die Mercaptocarbonsäureamide der Formel (I) addiert werden. Dazu gehören beispielsweise epoxidierte Polybutadiene oder epoxidierte Copolymere von Butadien oder Isopren mit Ethylen, Propylen, Ethylacrylat oder Styrol, ferner Polymere aus Acrylsäureglycidester und Copolymere mit Acrylsäureethylester, Ethylen, Propylen, Styrol, Vinylacetat mit Glycidylacrylat.

Die neuen Alterungsschutzmittel eignen sich für eine breite Palette von Kautschuken und Kunststoffen, insbesondere aber für Kautschuke, z. B. für Polymere aus 1,3-Dienen wie Butadien, Isopren, Piperylen, 2-Chlorbutadien, 2-Ethyl-butadien und deren Copolymere mit Vinylmonomeren, wie Styrol, p-Methylstyrol, α-Methylstyrol, Norbornen, Norbornadien, Acrylsäure, Acrylsäureester und -amide, Acrylnitril, Ethylen, Propylen und Vinylacetat, für Polyalkenamere, besipielsweise aus Cyclopenten oder 1,5-Cyclooctadien, und für Polymere aus 1-Olefinmischungen, beispielsweise aus Ethylen/Propylen oder Ethylen/Propylen/Dien mit isolierten Doppelbindungen. Solche Polymeren können durch radikalische, koordinative, metathetische oder ionische Polymerisation entstanden sein.

Beispiele derartiger Polymere sind :

Naturkautschuk, SBR-, NBR-, EPDM- und CR-Kautschuk, Polypentenamer, ferner Polyethylen, Polypropylen oder Polystyrol mit geringen Gehalten an Doppelbindungen, schließlich auch ein- und mehrphasige Polymermischungen, wie ABS oder Polystyrol, Polyethylen, Polypropylen, bevorzugt aber Doppelbindungen enthaltende Polymerisate.

Besonders wirkungsvoll sind die Alterungsschutzmittel bei Nitrilkautschuk.

Die Kautschuke können vulkanisiert sein.

Eine weitere Verbesserung der Bruchdehnung kann durch Zusatz von 5 bis 15 Gew.-%, bezogen auf Kautschukfeststoff, oligomerer Thioether, beispielsweise Etherthioether wie Vulkanol 85[R] der Bayer AG, Leverkusen, erzielt werden.

## Beispiel 1

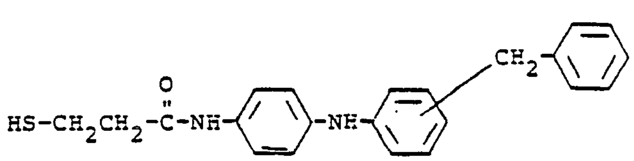

a) Zu einem Gemisch von 184 g (1,0 Mol) 4-Aminodiphenylamin und 20 g säureaktivierter Bleicherde wurden unter Rühren und Stickstoff bei 200 °C 216 g (2 Mol) Benzylalkohol in 1 h zugetropft. Man hielt noch 3 h bei 200 °C, filtrierte nach Verdünnen mit Toluol durch eine Drucknutsche, dampfte das Filtrat ein und destillierte unter vermindertem Druck nicht umgesetzte Ausgangsprodukte und schließlich bei 230-260 °C/0,6-1,0 mbar 280 g einer Fraktion, die neben dem benzylsubstituierten 4-Aminodiphenylamin geringe Mengen der dibenzylsubstituierten Verbindung enthielt.

b) Ein Gemisch von 137 g (ca. 0,5 Mol) des Produktes aus Ia, 53 g (0,5 Mol) β-Mercaptopropionsäure und 250 ml Xylol wurden am Wasserabscheider unter Rückfluß, Stickstoff und Rühren gekocht, bis kein Wasser mehr abgeschieden wurde. Insgesamt konnten 7,3 ml $H_2O$ abgetrennt werden. Die Lösung wurde bis zu einer Sumpftemperatur von 175 °C/10 mbar eingedampft und damit von Xylol und nicht umgesetzter Mercaptopropionsäure befreit. Man erhielt 168 g eines braunen Harzes mit einem SH-Gehalt von 8,4 % Gew.-%, d. h. 92 % des errechneten Wertes.

(Siehe Figur Seite 5 f.)

Beispiel 2

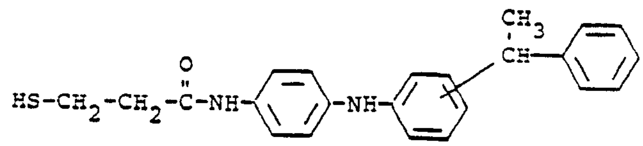

a) Zu einem Gemisch von 184 g (1,0 Mol) 4-Aminodiphenylamin und 20 g säureaktivierter Bleicherde wurden bei 200 °C unter Rühren und Stickstoff in 2 h 208 g (2,0 Mol) Styrol zugetropft und das Gemisch noch 1 h bei 200 °C gehalten. Nach Verdünnen mit Toluol wurde durch eine drucknutsche filtriert, das Filtrat unter vermindertem Druck destilliert und von Lösungsmittel und nicht umgesetzten Ausgangsprodukten befreit. Schließlich gingen bei 220-243 °C/0,2-0,3 mbar 286 g der gewünschten Verbindung über.

b) Ein Gemisch von 144 g (ca. 0,5 Mol) der Verbindung aus 2a, 53 g (0,5 Mol) β-Mercaptopropionsäure und 250 ml Xylol wurde unter Rühren, Rückfluß und Stickstoff am Wasserabscheider gekocht, bis 7,5 ml Wasser abgetrennt waren. Dann wurde die Lösung bis zu einer Sumpftemperatur von 170 °C bei 10 mbar eingedampft. Man erhielt 176 g eines braunen Harzes mit einem SH-Gehalt von 8,3 Gew.-% entsprechend 94 % des errechneten Wertes.

Beispiel 3

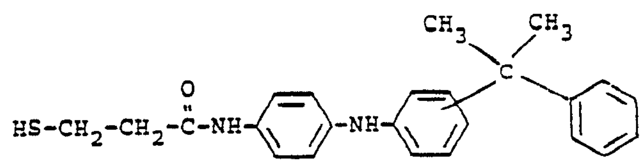

und

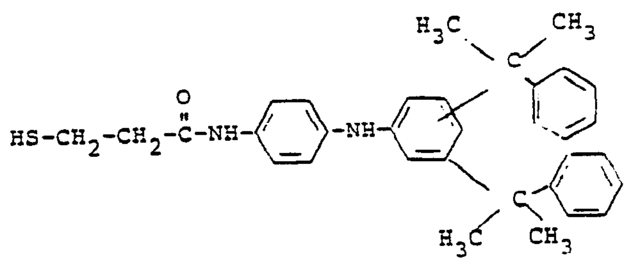

a) Zu einem Gemisch von 800 g (4,35 Mol) 4-Aminodiphenylamin und 80 g säureaktivierter Bleicherde tropfte man unter Rühren und Stickstoff bei 200 °C in 2 h 1 025 g (8,7 Mol) α-Methylstyrol, hielt noch 1 h bei 200 °C, filtrierte das mit Toluol verdünnte Reaktionsgemisch durch eine Drucknutsche und destillierte das Filtrat unter vermindertem Druck, wobei zunächst Lösungsmittel und nicht umgesetzte Ausgangsprodukte übergingen, dann folgte bei 236-255 °C/0,3 mbar eine Fraktion I (787 g), die im wesentlichen aus monoalkylierten Verbindungen bestand und dann bei 268-288 °C/0,3-0,5 mbar eine Fraktion II (530 g), die im wesentlichen aus der dialkylierten Verbindung bestand.

b) Ein Gemisch aus 151 g (ca. 0,5 Mol) der Fraktion I aus 3a, 53g (0,5 Mol) β-Mercaptopropionsäure und 250 ml Xylol ließ man wie in 2b bis zur Beendigung der Wasserabscheidung (8,0 ml) reagieren und arbeitete analog auf. Man erhielt ein langsam kristallisierendes braunes Harz (188 g) mit einem SH-Gehalt von 8,4 Gew.-%; entsprechend dem berechneten Wert.

Beispiel 4

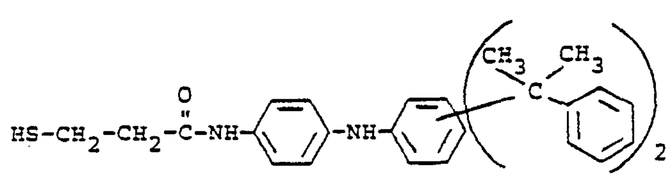

Ein Gemisch aus 210 g (ca. 0,5 Mol) der Fraktion II aus 3a, 53 g (0,5 Mol) β-Mercaptopropionsäure und 300 ml Xylol wurden wie in 3b miteinander umgesetzt. Man erhielt 7,5 ml $H_2O$ und ein dunkelbraunes Harz mit einem SH-Gehalt von 6,1 Gew.-% entsprechend 97 % des berechneten Wertes.

(Siehe Figur Seite 6 f.)

Beispiel 5

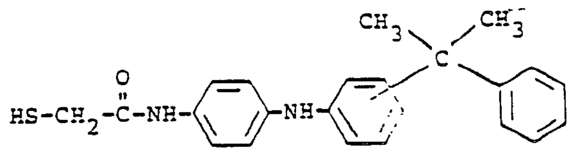

Ein Gemisch von 151 g (ca. 0,5 Mol) der Fraktion I aus 3a, 46 g (0,5 Mol) Mercaptoessigsäure und 250 ml Xylol wurden wie in 3b miteinander umgesetzt, wobei 8,5 ml $H_2O$ abgespalten wurden. Man erhielt 188 g eines hellbraunen, langsam kristallisierenden Harzes mit einem SH-Gehalt von 7,8 Gew.-% das sind 89 % des berechneten Wertes.

Beispiel 6

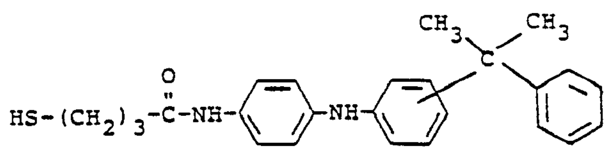

Ein Gemisch aus 151 g (ca. 0,5 Mol) der Fraktion I aus 3a, 51 g (0,5 Mol) γ-Thio-butyrolacton wurden 5 h unter Rühren und Stickstoff auf 140-150 °C erhitzt. Das gebildete hellbraune Harz wies einen SH-Gehalt von 7,3 Gew.-% auf, das sind 89 % des berechneten Wertes.

Beispiel 7

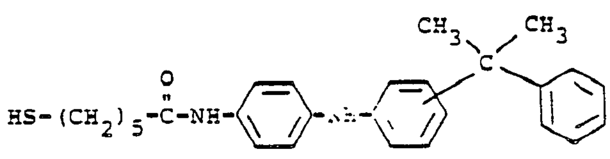

Ein Gemisch aus 151 g (ca. 0,5 Mol) der Fraktion I aus 3a, 74 g (0,5 Mol) ε-Mercapto-capronsäure und 300 ml Xylol wurden wie in 3b miteinander umgesetzt und anschließend bis zu einer Sumpftemperatur von 180 °C bei 1 mbar von flüchtigen Substanzen befreit. Man erhielt ein braunes Harz mit einem SH-Gehalt von 7,3 Gew.-%, das sind 95 % des berechneten Wertes.

Beispiel 8

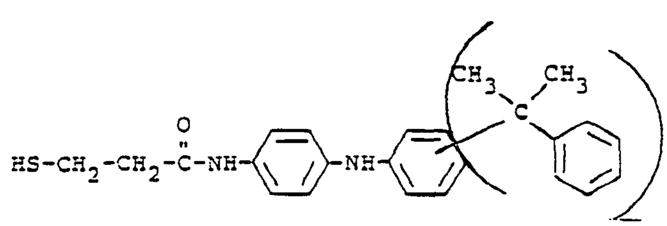

1 u. 2

Beispiel 3a wird wiederholt, das rohe Reaktionsprodukt wurde jedoch nicht fraktioniert destilliert, sondern 132 g davon wurden nach Abtrennung nicht umgesetzter Ausgangsprodukte direkt mit 41 g β-Mercaptopropionsäure kondensiert. Man erhält ein tiefdunkelbraunes Harz mit einem SH-Gehalt von 7,5 Gew.-%.

Beispiel 9

Unter Ausschluß von Sauerstoff wurden in 200 ml Toluol 50 g Polybutadien mit einem 1,2-Doppelbindungsanteil von 88 % und einer Viskositätszahl [η] = 1,0 dl/g (Toluol, 80 °C) und 40 g der Verbindung gemäß Beispiel 3b gelöst. Man gab 1 g Azodiisobuttersäurenitril zu und erwärmte unter Rühren 6 Stunden auf 80 °C. Nach Abkühlen auf Raumtemperatur wurde mit 500 ml Methanol versetzt und das ausgefällte Produkt abfiltriert, mit frischem Methanol gewaschen und bei 50 °C im Vakuum bis zur Gewichtskonstanz getrocknet ; Ausbeute 75 g. Stickstoffgehalt 2,55 Gew.-% ; Schwefelgehalt 3,0 Gew.-%.

Danach enthält das Reaktionsprodukt 36 Gew.-% Alterungsschutzmittel chemisch gebunden.

Beispiel 10

Wie im Beispiel 9 beschrieben, wurden 100 g Polybutadien mit einem 1,2-Doppelbindungsanteil von 58 % und einer Viskositätszahl [η] = 0,6 (Toluol, 80 °C) mit 40 g Alterungsschutzmittel gemäß Beispiel 3b umgesetzt. Ausbeute : 125 g, Schwefelgehalt 1,6 Gew.-%. Das Produkt enthielt danach 20 Gew.-% chemisch gebundenes Alterungsschutzmittel.

Beispiel 11

In 100 ml Toluol werden 130 g eines Copolymeren aus 80 Gew.-% Butadien und 20 Gew.-% Acrylnitril mit einem Molekulargewicht von 2 200 (Zahlenmittel) und 85 g des Alterungsschutzmittels aus Beispiel 3b unter Ausschluß von Sauerstoff gelöst. Man gab 5 g Azodiisobuttersäurenitril zu und erwärmte 6 Stunden auf 80 °C. Nach Abkühlen auf Raumtemperatur versetzte man mit 500 ml Methanol und rührte 2 Stunden. Das ausgefällte Öl wird abgetrennt und im Rotationsverdampfer vom restlichen Lösemittel befreit. Ausbeute : 215 g ; Schwefelgehalt : 3,3 Gew.-%. Danach enthält das Produkt 40 Gew.-% chemisch gebundenes Alterungsschutzmittel.

Beispiel 12

100 g eines epoxidierten Polybutadien-Öles mit einem Gehalt von 4 Gew.-% Epoxid-Sauerstoff, einem Gehalt von 38 % Vinyldoppelbindungen und einer Molekularmasse $M_n$ = 1 400 werden mit 50 ml Toluol gelöst und mit 70 g der Verbindung aus Beispiel 3b versetzet. Man erwärmt auf 80 °C und gibt eine Lösung von 0,1 g Triethylamin in 10 ml Toluol zu und steigert die Reaktionstemperatur unter Rühren auf 100 °C. Nach 5 h wird auf Raumtemperatur abgekühlt. Flüchtige Anteile werden im Rotationsverdampfer bei 70 °C, 20 mm Hg-Druck, abgezogen. Man erhält 170 g eines viskosen Öls, das einen Schwefelgehalt von 3,3 Gew.-% besitzt.

Beispiel 13

Ein NBR-Kautschuk aus 72 Gew.-% Butadien und 28 Gew.-% Acrylnitril wurde nach folgender Rezeptur in Anwesenheit der erfindungsgemäßen Stabilisatoren vulkanisiert :

100,00 Gew.-Tle NBR
0,75 Gew.-Tle Stearinsäure
3,0 Gew.-Tle Zinkoxid
1,5 Gew.-Tle Mercaptosilan
2,5 Gew.-Tle eines Gemisches aus Fettsäure und Fettsäureestern
30,0 Gew.-Tle gefällte Kieselsäure
30,0 Gew.-Tle Kaolin, calciniert
0,25 Gew.-Tle Schwefelgranulat 80 %ig
2,5 Gew.-Tle Tetramethylthiuramdisulfid
2,0 Gew.-Tle Dibenzothiazyldisulfid
2,0 Gew.-Tle Alterungsschutzmittel A-D

A = Distyryldiphenylamin
B = Verbindung aus Beispiel 3b
C = Vergleichsprodukt Nr. II aus Übersicht auf S. 15 der DE-OS 2 735 178
D = Polymeres aus Beispiel 11*

* : Es werden 5 Gew.-Teile des Polymeren, das einen Gehalt an Alterungsschutzmittel von 40 Gew.-% aufweist, eingesetzt, so daß der Zusatz an Alterungsschutzmittel, wie angegeben 2 Gew.-Teile beträgt.

Die Mischung erfolgte in einem 3,5-1-Kneter bei 35 UpM, einem Stempeldruck von 8 bar, einer Anfangstemperatur von 40 °C und einer Mischzeit von 4,5 Minuten.

| | A | B | C | D |
|---|---|---|---|---|
| Mooney Scorch 120°C (min) | 25 | 20 | 10 | 25 |
| Vulkameter $t_{10}$ (min) | 2,5 | 2,8 | 1,7 | 2,7 |
| 170° $t_{70}$ (min) | 3,7 | 3,7 | 2,6 | 3,6 |
| Vulkanisation 20' 170°C Normstab II | | | | |
| Zugfestigkeit (MPa) | 12,0 | 13,1 | 12,8 | 15,1 |

(Fortsetzung)

| | A | B | C | D |
|---|---|---|---|---|
| Bruchdehnung % | 390 | 490 | 740 | 530 |
| Härte RT Shore A | 62 | 63 | 62 | 61 |
| Heißluftalterung 135°C, Messungen nach 10 Tagen, Zellofen | | | | |
| Zugfestigkeit MPa | 11,6 | 12,2 | 6,8 | 10,7 |
| Bruchdehnung % | 215 | 250 | 60 | 210 |
| Härte RT Shore A | 71 | 68 | 81 | 68 |

Aus den Messungen ergibt sich :

1. Vergleichsprodukt C entsprechend DE-OS 2 735 178 bewirkt eine sehr kurze Anvulkanisationsdauer gegenüber den erfindungsgemäßen Produkten und dem Vergleich A.
2. C weist einen wesentlich schlechteren Alterungsschutz auf (rascher Abfall der Bruchdehnung) als das handelsübliche aminische Akterungsschutzmittel A.
3. Die erfindungsgemäßen Produkte B und D entsprechen in der Anvulkanisationszeit praktisch dem Alterungsschutzmittel A, ihre Schutzwirkung ist erheblich besser als die von C und mindestens gleich bis geringfügig höher als die von A.

## Beispiel 14

Ein NBR-Kautschuk aus 72 Gew.-% Butadien und 28 Gew.-% Acrylnitril wurde nach folgender Rezeptur in Anwesenheit der erfindungsgemäßen Stabilisatoren vulkanisiert :

100,00 Gew.-Tle NBR
0,75 Gew.-Tle Stearinsäure
3,0 Gew.-Tle Zinkoxid
1,5 Gew.-Tle Mercaptosilan
2,5 Gew.-Tle eines Gemisches aus Fettsäure und Fettsäureestern
30,0 Gew.-Tle gefällte Kieselsäure
30,0 Gew.-Tle Kaolin, calciniert
0,25 Gew.-Tle Schwefelgranulat 80 %ig
2,0 Gew.-Tle Zinksalz des 4- bzw. 5-Methylmercaptobenzimidazol
2,0 Gew.-Tle Tetramethylthiuramdisulfid
2,0 Gew.-Tle Dibenzothiazyldisulfid
2,0 Gew.-Tle Alterungsschutzmittel A-F

A = Distyryldiphenylamin
B = Beispiel 6
C = Beispiel 7
D = Beispiel 8
E = Beispiel 2b
F = Beispiel 1b

Die Mischung erfolgte entsprechend Beispiel 13.

| | A | B | C | D | E | F |
|---|---|---|---|---|---|---|
| Mooney Scorch 120 °C (min) | 26 | 20 | 21 | 21 | 22 | 22 |
| Vulkameter $t_{10}$ (min) | 3,1 | 3,1 | 2,9 | 3,2 | 3,0 | 3,0 |
| 170 °C $t_{70}$ (min) | 3,7 | 3,8 | 3,8 | 4,0 | 3,8 | 3,8 |
| Vulkanisation 20' 170 °C Normstab II | | | | | | |
| Zugfestigkeit (MPa) | 13,1 | 13,8 | 13,5 | 14,4 | 13,4 | 13,7 |
| Bruchdehnung (%) | 380 | 490 | 480 | 510 | 510 | 500 |
| Härte RT (Shore A) | 66 | 64 | 64 | 63 | 63 | 63 |

Lagerung in Kraftstoff C 48 Std. 40 °C
Rücktrocknung in Vakuum 48 Std. 40 °C
Heißluftalterung 135 °C Zellofen 11 Tage

| | | | | | | |
|---|---|---|---|---|---|---|
| Zugfestigkeit (MPa) | 6,5 | 9,0 | 10,4 | 9,4 | 9,6 | 9,3 |
| Bruchdehnung (%) | 90 | 160 | 160 | 160 | 150 | 135 |
| Härte RT (Shore A) | 73 | 71 | 73 | 71 | 72 | 72 |

Aus den Messungen ergibt sich :

Die erfindungsgemäßen Produkte B, C, D, E, F zeigen wesentlich bessere Schutzwirkung bei Heißluftalterung nach Kraftstofflagerung. Das bedeutet, daß sie im Gegensatz zu Produkt A des Standes der Technik nicht extrahiert werden.

Beispiel 15

Ein NBR-Kautschuk aus 72 Gew.-% Butadien und 28 Gew.-% Acrylnitril wurde nach der Rezeptur von Beispiel 14D in Abwesenheit oder Anwesenheit eines oligomeren Etherthioethers (Vulkanol 85[R]) vulkanisiert. Die Mischung erfolgte in einem 1,3-1 Kneter bei 35 UpM, einem Stempeldruck von 8 bar, einer Anfangstemperatur von 40 °C und einer Mischzeit von 3 Minuten.

A ohne Zusatz
B 5 Gew.-Teile oligomerer Ether-thioether
C 10 Gew.-Teile oligomerer Ether-thioether jeweils auf 100 Gew.-Teile Kautschuk.

| | A | B | C |
|---|---|---|---|
| Mooney Scorch 120° | 18' | 18' | 18' |
| Vulkameter $t_{10}$ | 2,5 | 2,5 | 2,5 |
| 170° $t_{70}$ | 3,4 | 3,7 | 3,8 |
| Vulkanisation 20' 170 °C Normalstab II | | | |
| Zugfestigkeit (MPa) | 20,7 | 23,1 | 20,8 |
| Bruchdehnung (%) | 530 | 650 | 660 |
| Stärke RT Shore A | 63 | 58 | 56 |
| Heißluftalterung | 150° | | 72 St. |
| Zugfestigkeit $F/F_0$ (MPa) % | 76 | 65 | 74 |
| Bruchdehnung $D/D_0$ (%) | 77 | 72 | 82 |
| Härte RT $H-H_0$ Shore A | +7 | +7 | +6 |

Aus diesen Messungen ergibt sich : Die Wirksamkeit der erfindungsgemäßen Alterungsschutzmittel läßt sich durch Zugabe von Thioethern weiter steigern. Die Dosiermenge muß auf die Rezeptur abgestimmt sein.

**Patentansprüche**

1. Verbindungen der Formel

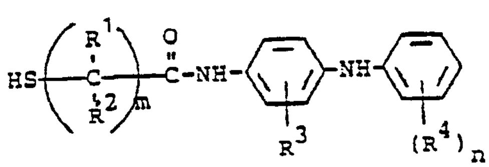

in der

$R^1$ und $R^2$ H oder $C_1$-$C_4$-Alkyl,
$R^3$ H oder $CH_3$
$R^4$ $C_7$-$C_{20}$-Aralkyl
n 1 oder 2 und
m eine ganze Zahl von 1-12 bedeuten.

2. Verbindungen nach Anspruch 1,

worin

$R^1$ und $R^2$ Wasserstoff oder Methyl,

$R^3$ Wasserstoff,
$R^4$ Aralkyl mit 7-18 C-Atomen,
n 1 und
m 1-10 bedeuten.

3. Verbindungen nach Anspruch 1,

worin
$R^1$, $R^2$ und $R^3$ Wasserstoff,
$R^4$ Aralkyl mit 7-9 C-Atomen,
n 1 und
m 2-6 bedeuten.

4. Verfahren zur Herstellung von Verbindungen gemäß Anspruch 1, dadurch gekennzeichnet, daß man 4-Aminodiphenylaminderivate der Formel

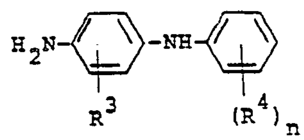

mit Mercaptocarbonsäurederivaten der Formeln

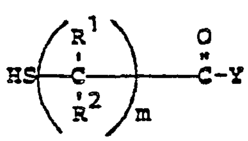 oder 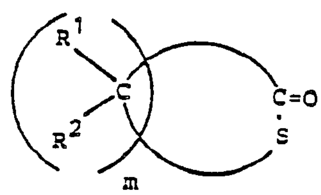

umsetzt, wobei $R^1$, $R^2$, $R^3$, $R^4$, m und n die in Anspruch 1 genannte Bedeutung besitzen und Y OH oder $OR^1$ bedeutet.

5. Verfahren nach Anspruch 4, dadurch gekennzeichnet, daß man die Umsetzung mit ungefähr äquimolaren Mengen der Reaktionspartner bei 80 bis 200 °C vornimmt.

6. Polymere enthaltend Verbindungen nach Anspruch 1.

7. Kautschuke und Vulkanisate der Kautschuke enthaltend Verbindungen nach Anspruch 1.

8. Nitrilkautschuke und Vulkanisate von Nitrilkautschuken enthaltend Verbindungen nach Anspruch 1.

9. Polymere nach Anspruch 6, enthaltend 0,2 bis 10 Gew.-% an Verbindungen nach Anspruch 1.

10. Kautschuke und Vulkanisate der Kautschuke nach Anspruch 7 enthaltend zusätzlich 5 bis 15 Gew.-%, bezogen auf Kautschukstoff, eines oligomeren Thioethers.

**Claims**

1. Compounds of the formula

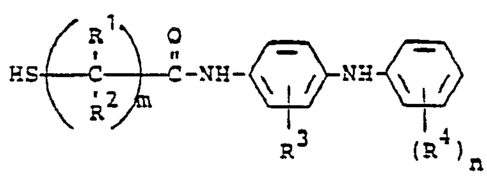

in which
$R^1$ and $R^2$ denote H or $C_1$-$C_4$-alkyl,
$R^3$ denotes H or $CH_3$,
$R^4$ denotes $C_7$-$C_{20}$-aralkyl,
n denotes 1 or 2 and
m denotes an integer from 1-12.

2. Compounds according to Claim 1,

wherein
$R^1$ and $R^2$ denote hydrogen or methyl,
$R^3$ denotes hydrogen,
$R^4$ denotes aralkyl with 7-18 C atoms,

n denotes 1 and
m denotes 1-10.

3. Compounds according to Claim 1, wherein
$R^1$, $R^2$ and $R^3$ denote hydrogen,
$R^4$ denotes aralkyl with 7-9 C atoms,
n denotes 1 and
m denotes 2-6.

4. Process for the preparation of compounds according to Claim 1, characterised in that 4-aminodiphenylamine derivatives of the formula

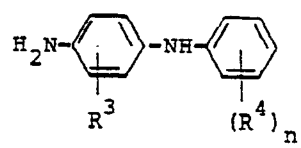

are reacted with mercaptocarboxylic acid derivatives of the formulae

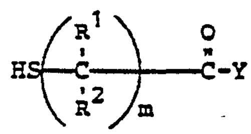 or 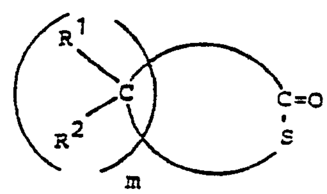

wherein $R^1$, $R^2$, $R^3$, $R^4$, m and n have the meaning given in Claim 1 and Y denotes OH or $OR^1$.

5. Process according to Claim 4, characterised in that the reaction is carried out with approximately equimolar quantities of the reactants at 80 to 200 °C.

6. Polymers containing compounds according to Claim 1.

7. Rubbers and vulcanisates of the rubbers containing compounds according to Claim 1.

8. Nitrile rubbers and vulcanisates of nitrile rubbers containing compounds according to Claim 1.

9. Polymers according to Claim 6, containing 0.2 to 10 % by weight of compounds according to Claim 1.

10. Rubbers and vulcanisates of the rubbers according to Claim 7 containing additionally 5 to 15 % by weight, based on rubber solids, of an oligomeric thioether.

**Revendications**

1. Composés de formule

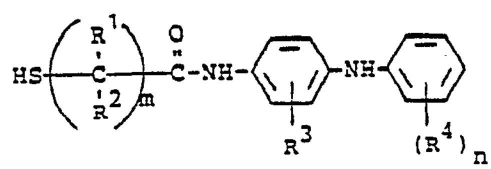

dans laquelle
$R^1$ et $R^2$ représentent H ou un groupe alkyle en $C_1$ à $C_4$,
$R^3$ représente H ou $CH_3$
$R^4$ représente un groupe aralkyle en $C_7$ à $C_{20}$,
n a la valeur 1 ou 2 et
m est un nombre entier de 1 à 12.

2. Composés suivant la revendication 1, dans lesquels
$R^1$ et $R^2$ représentent l'hydrogène ou le groupe méthyle,
$R^3$ est l'hydrogène,
$R^4$ représente un groupe aralkyle ayant 7 à 18 atomes de carbone,
n est égal à 1 et
m a une valeur de 1 à 10.

3. Composés suivant la revendication 1,

dans lesquels

$R^1$, $R^2$ et $R^3$ sont de l'hydrogène,

$R^4$ est un groupe aralkyle ayant 7 à 9 atomes de carbone,

n est égal à 1 et

m a une valeur de 2 à 6.

4. Procédé de production de composés suivant la revendication 1, caractérisé en ce qu'on fait réagir des dérivés de 4-aminodiphénylamines de formule

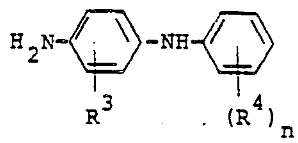

avec des dérivés d'acides mercaptocarboxyliques de formules

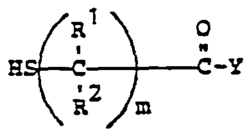

ou

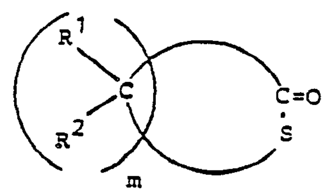

formules dans lesquelles $R^1$, $R^2$, $R^3$, $R^4$, m et n ont la définition mentionnée dans la revendication 1 et Y représente OH ou $OR^1$.

5. Procédé suivant la revendication 4, caractérisé en ce qu'on conduit la réaction à une température de 80 à 200 °C avec des quantités à peu près équimolaires des partenaires réactionnels.

6. Polymères contenant des composés suivant la revendication 1.

7. Caoutchoucs et vulcanisats de caoutchoucs contenant des composés suivant la revendication 1.

8. Caoutchoucs nitriliques et vulcanisats de caoutchoucs nitriliques contenant des composés suivant la revendication 1.

9. Polymères suivant la revendication 6, contenant 0,2 à 10 % en poids de composés suivant la revendication 1.

10. Caoutchoucs et vulcanisats de caoutchoucs suivant la revendication 7, contenant en outre 5 à 15 % en poids, par rapport à la substance caoutchouc, d'un thioéther oligomère.